# EUROPEAN PATENT SPECIFICATION

(11) **EP 1 923 269 B1**
(45) Date of publication and mention of the grant of the patent: **28.07.2010**
(21) Application number: 07120780.7
(22) Date of filing: 15.11.2007
(51) Int. Cl.: B60R 5/04, B60J 1/20

(54) **An automatic release system for a separating or screening element for the passenger compartment of a vehicle, for example a sun blind or a separator between the passenger compartment and the baggage compartment of the vehicle**
Automatisches Lösesystem für ein Trenn- bzw. Verdunkelungselement für den Insassenraum eines Fahrzeuges, etwa eine Sonnenblende oder Trennvorrichtung zwischen dem Insassenraum und Kofferraum des Fahrzeuges
système de libération automatique pour élément de séparation ou de criblage pour le compartiment passager d' un véhicule, par exemple un aveugle ou un séparateur entre le compartiment passager et le compartiment à bagages d'un véhicule

(30) Priority: 16.11.2006 IT TO20060819
(43) Date of publication of application: 21.05.2008
(73) Proprietor: Fibro S.p.A., 10040 Cumiana (IT)
(72) Inventor: Signoretto, Carlo, 10129, TORINO (IT)
(74) Representative: Jorio, Paolo

(56) References cited:
- EP-A- 1 177 948
- EP-A- 1 225 094
- EP-A- 1 524 152
- DE-A1- 10 161 647
- DE-A1- 10 256 348

## Description

The present invention relates to an automatic release system for a separating or screening element for the passenger compartment of a vehicle, e.g. a separating element between passenger compartment and baggage compartment, such as a safety net or a baggage cover, or a roller sun blind of the type used to screen transparent sunroofs or similar large glazed surfaces of the vehicle.

It is known that both the separating elements and the sun blinds of the aforesaid type present a first side operatively connected in a rolling manner, under the bias of elastic return means, to an essentially rigid support, e.g. a tubular casing, fixable to the bodywork of the vehicle, and a second side opposite to first and connected to an essentially rigid bar arranged parallel to the support and relatively mobile with respect to the same in a direction perpendicular thereto against the bias of the elastic return means; the bar is releasably fixable to the bodywork in distal position from the support by means of attachment means including anchoring means carried by the vehicle bodywork and retaining means integrally carried by opposite ends, possibly spring-mounted, of the bar, which protrude from opposite sides of the separating or screening element arranged perpendicularly to the first and second side of the same and restrainable in use to the anchoring means.

As in such an arrangement, the separating or screening element is held extended in extracted position from the casing only by effect of the contrast between the tension applied to it by the elastic return means carried by the casing and the resistant force exerted by appropriate shoulders of the anchoring means,in use the rolling element may be released accidentally from the anchoring means, thus abruptly rolling back into the casing, with possible damage to the rolling mechanism, due to the jolts and the vibrations to which the vehicle is subjected while traveling. In order to avoid this drawback, anchoring means made so as to prevent accidental releases are used, but this makes both the fastening operation and the releasing operation of the bar onto/from the anchoring means more difficult.

In some embodiments, for example, where the ends of the bars are spring-mounted, locking systems of the bar which may be released only by means of buttons are also used; however, this solution is constructively complex and expensive and is not always satisfactory for the user.

EP 1 542 152 A discloses an automatic release system according to the preamble of claim 1.

It is the object of the present invention to overcome the described drawbacks by providing an automatic release system for a separating or screening element for the passenger compartment of a vehicle of the aforesaid types, such as for example a baggage cover or a sun blind, which is small in size, cost-effective to manufacture and reliable to operate, and is thus seldom or never subject to jamming, and which for its structure is subject to little wear in use, which tends not to generate bothering noises also after a long period of use, and which is simple to mount and use.

According to the invention, there is thus provided an automatic release system comprising a separating or screening element for the passenger compartment of a vehicle, e.g. a safety net, a removable baggage cover or a sun blind, as defined in claim 1.

Specifically the release system according to the invention includes a first side of the separating or screening element operatively connected in a rolling manner, under the bias of elastic return means, to an essentially rigid support fixable to the bodywork of the vehicle and a second side opposite to the separating element, opposite to the first, connected to an essentially rigid bar arranged parallel to the support and relatively mobile with respect to the same in a direction perpendicular thereto against the bias of the elastic return means; the bar is releasably fixable to the bodywork in distal position from the support by means of attachment means including anchoring means carried by the vehicle bodywork and retaining means integrally carried by opposite ends of the bar which protrude from opposite sides of the separating or screening element, arranged perpendicularly to the first and second side of the same and restrainable in use to the anchoring means.

According to an aspect of the invention, the retaining means comprise at least one tooth hinged to the tilting bar about a first axis parallel to the first and second side of the rolling element; and bistable return means adapted to selectively force the tilting tooth, in consequence of a relative rotation of the bar about a second axis parallel to the first, towards a first and a second stopper position, in which the tooth is adapted to respectively engage and not engage engaging means of the anchoring means.

The bistable return means are chosen from the group consisting of: magnetic means, elastic means and combinations thereof. "Magnetic means" hereinafter mean any element or device adapted to produce a magnetic field either due to its intrinsic feature, e.g. a permanent magnet, or when electrically supplied, e.g. an electromagnet, i.e. interacting with a magnetic or electromagnetic field, such as a plate or a insert, metallic or however formed by a ferromagnetic material.

The anchoring means comprise, for each end of the bar, a seat for the retaining means, in which seat the retaining means are accomodatable with clearance through a mouth of the seat facing the opposite side of the support and which is provided, towards the support, with abutment means adapted to prevent the bar from moving towards the support under the bias of the elastic return means; and, towards the mouth, with engagement means for the tooth, which are adapted to prevent the extraction of the retaining means from the seat when the tooth is in said first stopper position; the seat is shaped so as to allow the relative rotation of the bar with respect to the tooth about the second axis so as to cause an at least partial release of the tooth from the engagement means in the first stopper position of the tooth.

In this manner, the user may perform the fastening and releasing maneuvers of the bar onto/from the anchoring means in an extremely simple manner, but the rolling separating or screening element cannot be released in use by the jolts of the traveling vehicle, because the ends of the bar are held fastened in the seats by the anchoring means of the tooth; during the step of releasing, the user does not need to press any button; the only operation he/she needs to perform is that of giving a partial rotation to the bar while pulling it to extract it from the seats of the anchoring means; indeed, such operation produces the effect of sufficiently moving the tooth away from its fastening position so as to allow the bistable return means to intervene and take the tooth itself into the second stopper position, which is a release position, which allows to complete the extraction of the bar from the anchoring means without other more complex operations.

In practice, in a preferred embodiment, the bistable return means consist in first magnetic means integrally carried by the tooth; and in second and third magnetic means integrally mounted in the seat and onto the bar respectively and adapted to generate, when they are in proximity of the first magnetic means, a first and a second reciprocally opposite return force of the tooth; the second magnetic means are mounted in the seat at the tooth engagement means.

Further objects and advantages of the invention will be apparent in the description that follows of an embodiment thereof, only by way of non-limitative example, with reference to figures of the accompanying drawings, in which:
- figure 1 diagrammatically shows a perspective three-quarters view from the top of a separating element between the passenger compartment and the baggage compartment of a vehicle provided with an automatic release system according to the invention;
- figure 2 shows a side detail on enlarged scale of the fastening system of the invention;
- figure 3 shows a perspective three-quarters view from the top and on further enlarged scale of a detail in figure 2; and
- figures from 4 to 7 diagrammatically show elevation views of various operating configurations of the release system according to the invention shown in sectioned view according to a plotting plane IV-IV with respect to the figure 1.

Specifically, in the description that follows with reference to the aforesaid figures, there will be described an application of the invention to a separator element between the passenger compartment and the baggage compartment of the vehicle, but it is apparent that the description may identically apply to any separating or screening roller element for the passenger compartment, such as a safety net or a sun blind.

With reference to figures from 1 to 3, numeral 1 shows as a whole an automatic release system for a separating element 2, between a passenger compartment 3 and a baggage compartment 4 of a vehicle (known and not shown for the sake of simplicity). The separating element 2 is in the non-limitative example shown a removable baggage cover intended to operate in a horizontal position, but in a different embodiment could also be a safety net, e.g. intended to operate in an essentially vertical position.

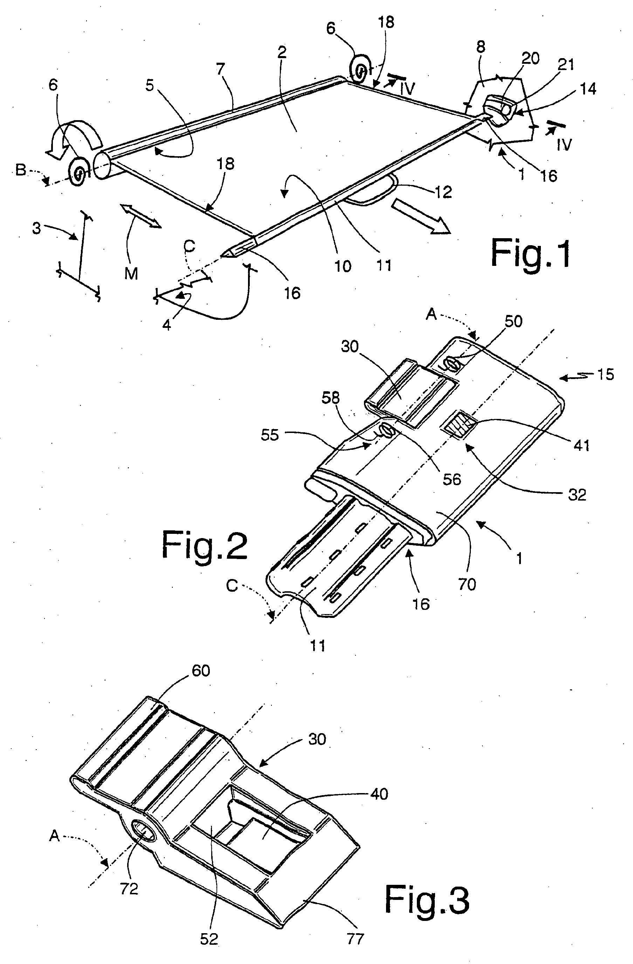

In either case, the separating element 2 is formed by a flexible material and presents a first side 5 operatively connected in rolling manner, under the bias of elastic return means 6, to an essentially rigid support 7 fixable to a bodywork 8 of the vehicle in a known manner (not shown), and a second side 10, opposite to the side 5, and connected to an essentially rigid bar 11 (bar possibly presenting a spring mounted system, known, in the sense of the length thereof) arranged parallel to the support 7 and relatively mobile to the same in a direction M perpendicular thereto, illustrated by the arrow in figure 1, against the bias of the elastic return means 6, which are carried in a known manner by the support 7, which generally consists of a metallic tubular casing.

The bar 11 is possibly provided with an operation handle (possible also obtained in the form of a through opening through the side 10 of the separating element 2) and is fixable in a releasable manner to the bodywork 8 in distal position from the support 7 by means of an attachment means including anchoring means 14 carried by the bodywork 8 of the vehicle and retaining means 15 integrally carried by opposite ends 16 of the bar 11 protruding from opposite sides 18 of the separating element 2 arranged perpendicularly to the sides 5 and 10 of the same; the ends 16 are restrainable in use, in the manner described below, to the anchoring means 14.

The anchoring means 14 (figures from 4 to 7) comprise, for each end 16 of the bar 11, a seat 20 for the retaining means 15, in which the same are accommodated with clearance through a mouth 21 in the seat 20 facing the opposite side of the support 7 and which is provided, towards the support 7, with abutting means 22 (defined by a bottom wall of the seat 20, which is blank) adapted to prevent the bar 11, in use, from moving towards the support 7 under the bias of the elastic return means 6 when the retaining means 15 engage the anchoring means 14, in the case in point are inserted in the seat 20.

According to a second important aspect of the invention, the retaining means 15 comprise at least one tooth 30 hinged onto the tilting bar 11 about a first axis A (figure 2) parallel to the sides 5 and 10 of the separating element 2 and an axis B of rolling of the element 2 in the casing 7, axis B on which the elastic means 6 acts.

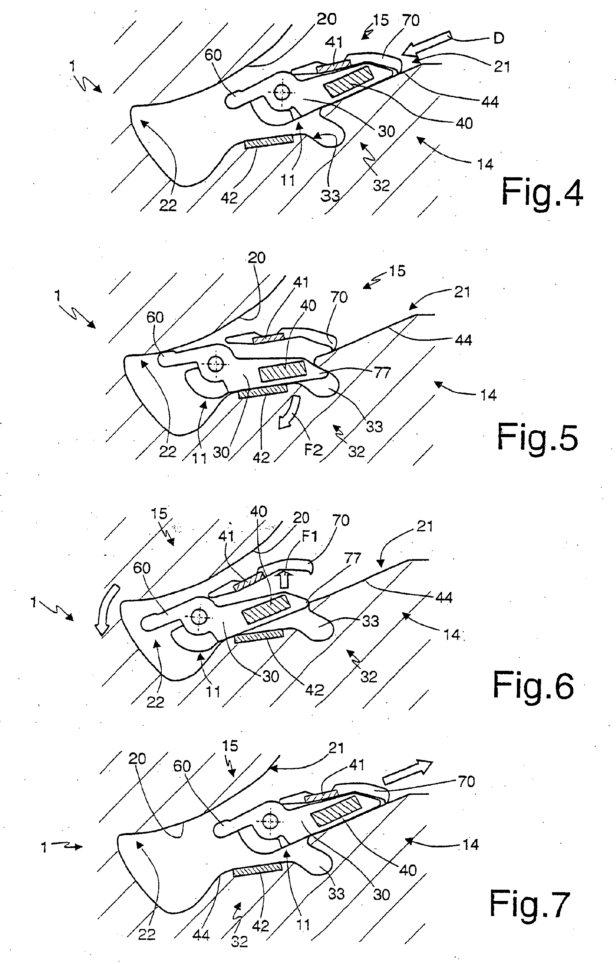

In combination with the tooth 30, the retaining means 15 further comprise bistable return means 32 (figure 2 and figures 4-7) adapted to selectively force the tilting tooth 30, in consequence of a relative rotation of the bar 11 about an axis C parallel to the axes A and B, towards a first stopper position, shown in figures 5 ad 6, in which the tooth 30 is adapted to respectively engage corresponding engagement means 33 obtained in the seat 20; and towards a second stopper position, shown in figures 4 and 7, in which the tooth 30 is adapted to not engage the engagement means 33.

Specifically, the engagement means 33 is situated towards the mouth 21 of the seat 20 and consist in a lobe-shaped recess of the seat 20 so as to be adapted to prevent the extraction of the retaining means 15 from the seat 20 when the tooth 30 is in the first stopper position in figures 5 and 6; in combination, the seat 20 is shaped so as to allow the bar 11 to turn inside the seat 20 itself relatively to the tooth 30 and to the separating element 2, e.g. by introducing a partial folding of the side 10, about the axis C, so a to cause at least a partial disengagement of the tooth 30 from the lobe-shaped recess 33 (figure 6) when this is in the first stopper position.

According to a further aspect of the invention, the bistable return means 32 are chosen from the group consisting of: magnetic means, elastic means and combinations thereof.

For example, according to a first, preferred embodiment of the invention, the bistable return means 32 consist in first magnetic means 40 integrally carried by the tooth 30, in second magnetic means 42 mounted inside the seat 20 and in third magnetic means 41 mounted integrally with the bar 11; the magnetic means 41 and 42 are specifically adapted to generate, when they are in proximity of the first magnetic means 40, a reciprocally opposite first return force F1 and a second return force F2 for the tooth 30, illustrated in the arrows in figures 6 and 5, respectively.

The second magnetic means 42 are further mounted in the seat 20 at the engagement means 33 for the tooth 30, in the case in point immediately downstream of the recess 33 (in the sense of the direction D of introduction of the retaining means 15 in the seat 20, shown by the arrow in figure 4), on a lower wall 44 of the seat 20, facing and opposite to the bottom wall 22 defining the abutment means for the bar 11.

According to a possible first alternative embodiment of the invention, the bistable return means 32 consist in the first magnetic means 40 and in the second magnetic means 42 integrally mounted in the seat 20 and adapted to generate, when in proximity of the first magnetic means, the second return force F2 for the tooth 30; and in a spring 50 (figure 2), which replaces the magnetic means 41, which is operatively carried and connected to the bar 11 and to the tooth 30 to generate the return force F1 on the tooth 30.

In both cases, the first magnetic means 40 consist of a permanent magnet, e.g. accommodated in a seat 52 of the tooth 30, while the second and third magnetic means 42 and 41 consist of corresponding plates made of a ferromagnetic material, e.g. galvanized or nickel-plated mild steel.

According to a second possible alternative embodiment of the invention, the bistable return means 32 are instead defined by a bistable elastic mechanism 55 (figure 2) e.g. of the known knee-pad type, operatively connected by a first end 56 thereof to the tooth 30 and by a second end 58 thereof, opposite to the first, to the bar 11.

Specifically, in the latter case, but preferably also in the cases of the previously described embodiments, the tooth 30 is provided, on opposite side to the engagement means 33, with a toe 60 adapted to cooperate at least partially with the seat 20 preferably on the side of the abutment means 22, to cause a relative rotation of the tooth 30 with respect to the bar 11 in the seat 20 between the first and the second stopper position.

In order to facilitate the assembly of the tooth 30, the retaining means 15 also comprise, for each end 16 of the bar 11, a contoured insert 70 integrally restrained to the bar 11 and carrying the tooth 30 hinged about the axis A by means of a pin couplable in a specific through seat 72 of the tooth 30, coaxial with the axis A; the insert 70 is case-shaped so that in the second stopper position of the tooth 30, the latter is at least partially accommodated inside the insert 70 and is however arranged within the transverse dimensions of the insert 70 in the seat 20; while, in the first stopper position, the tooth 30 protrudes from the insert 70 by at least an end 77 thereof intended to cooperate in use with the engagement means 33, arranged on opposite side of the toe 60.

The operation of the release system 1 is apparent from the description above and the operating steps thereof are illustrated in detail in figures from 4 to 7, with reference to the embodiment made with the use of magnetic means only.

When the baggage cover 2 is extended outside the casing 7, it is locked in extended position, against the bias of the return springs 6, by introducing the ends 16 of the bar 11 in the seats 20 (figure 4); in this step, the tooth 30 is maintained within the dimension of the case 70 by the attraction between the magnet 40 and the plate 41.

When the introduction of each end 16 in the corresponding seat 20 is complete or nearly complete, the toe 60 cooperates with the upper wall of the seat 20, opposite to the wall 44, or with the bottom wall 22 itself, so as to force the tooth 30 to turn in a direction so as to move the magnet 40 away from the plate 41 and on the other hand move it towards the plate 42; in this manner, the attraction force F2 is stronger than the force F1 and the tooth 30 snaps into the stopper position in which the end 77 thereof is extracted from the case 70 and engages the recess 33, thus preventing all and any possible accidental release of the ends 16 from the seats 20. For realizing the described step, it is not strictly necessary for the toe 60 to cooperate with the walls of the seat 20, if only magnetic means are used, because however during the step of introducing, the magnet 40 will be moved towards the plate 42, therefore if they are dimensioned so as to generate a force F2 however higher than the force F1 also with the tooth 30 fully retracted in the case 70, in the initial stopper position, the tooth 30 is however forced to turn and engage the recess 33 by the magnetic force alone.

In order to produce the automatic release of the tooth 30 (figure 6), it is sufficient for the user to turn the bar 11 in the sense of the arrow to move the magnet 40 away from the plate 42, with consequent decrease of the intensity of the force F2; the attraction force F1 exerted between magnet 40 and plate 41 may thus prevail and return the tooth 30 entirely into the case 70 allowing in such a manner the user to perform the extraction (figure 7) as if the safety locking mechanism constituted by the tooth 30 and by the recess were not present. Obviously, in case of need, the seat 20 may be shaped so that, by effect of the rotation of the bar 11, the toe 60 cooperates with the walls of the seat 20 so as to "assist" the rotation of the tooth 30 towards the case 70 and the plate 41.

## Claims

1. An automatic release system (1) comprising a rolling separating or screening element (2) for the passenger compartment of a vehicle; wherein the rolling element (2) presents: a first side (5) operatively connected to an essentially rigid support (7) fixable to the vehicle bodywork and in which support (7) the element is rolled from the side of the first side (5) under the bias of elastic return means (6); and a second side (10) opposite to the first and connected to an essentially rigid bar (11) arranged parallel to the support and mobile relatively to the same in a direction (M) perpendicular thereto against the bias of the elastic return means (6), which bar (11) is fixable in releasable manner to the bodywork in distal position from the support by means of the attachment means including anchoring means (14) carried by the vehicle bodywork and retaining means (15) integrally carried by opposite ends (16) of the bar protruding from opposite sides (18) of the rolling element arranged perpendicular to the first (5) and second (10) side of the same and restrainable to the anchoring means in use; **characterized in that** the retaining means (15) comprise: at least one tooth (30) hinged to the tilting bar (11), about a first axis (A) parallel to the first and second side (5;10) of the rolling element; and bistable return means (32) adapted to selectively force the tilting tooth (30), in consequence of a relative rotation of the bar (11) about a second axis (C) parallel to the first, towards a first and a second stopper position, in which the tooth (30) is adapted to respectively engage and not engage engaging means (33) of the anchoring means (14).

2. An automatic release system according to claim 1, **characterized in that** said bistable return means (32) are chosen from the group consisting in: magnetic means, elastic means and combinations thereof.

3. An automatic release system according to claim 1 or 2, **characterized in that** the anchoring means (14) comprise, for each end of the bar, a seat (20) for the retaining means (15), in which seat the retaining means are accomodatable with clearance through a mouth (21) of the seat (20) facing the opposite side of the support and which is provided, towards the support (7), with abutment means (22) adapted to prevent the bar from moving towards the support under the bias of the elastic return means (6); and, towards the mouth (21), with engagement means (33) for the tooth (30) which are adapted to prevent the extraction of the retaining means (15) from the seat (20) when the tooth is in said first stopper position; said seat (20) being shaped so as to allow the relative rotation of the bar (11) with respect to the tooth (30) about the second axis (C) so as to cause an at least partial release of the tooth (30) from the engagement means (33) in the first stopper position of the tooth.

4. An automatic release system according to claim 3, **characterized in that** said bistable return means (32) consist in first magnetic means (40) integrally carried by the tooth; and in second (42) and third (41) magnetic means integrally mounted, respectively, in the seat (20) and in the bar (11) and adapted to generate, when they are in proximity of the first magnetic means (40), a reciprocally opposite first (F1) and a second (F2) return force,; the second magnetic means (42) being mounted in the seat (20) at the engagement means (33) for the tooth.

5. An automatic release system according to claim 3, **characterized in that** said bistable return means (32) consist in first magnetic means (40) integrally carried by the tooth (30); in second magnetic means (42) integrally mounted in the seat (20) and adapted to generate, when they are in proximity of the first magnetic means, a first return force (F1) for the tooth (30); the second magnetic means (42) being mounted in the seat (20) at the engagement means (33) for the tooth; and a spring (50) operatively connected to the bar (11) and to the tooth (30) for generating a second return force (F2) opposite to the first on the tooth.

6. An automatic release system according to claim 4 or 5, **characterized in that** said first magnetic means (40) consist of a permanent magnet, while the second magnetic means (42) consist of a plate made of ferromagnetic material.

7. An automatic release system system according to claim 3, **characterized in that** said bistable return means (32) are defined by a bistable elastic mechanism (55), e.g. of the knee-pad type, operatively connected by a first end (56) to the tooth and by a second end (58), opposite to the first, to the bar.

8. An automatic release system according to one of the claims from 3 to 7, **characterized in that** said tooth (30) is provided, on opposite side to the engagement means, with a toe (60) adapted to cooperate at least partially with the seat (20), preferably on the side of said abutment means (22) of the seat, for causing a relative rotation of the tooth with respect to the bar in the seat (20) between the first and the second stopper position.

9. An automatic release system according to one of the claims from 3 to 8, **characterized in that** said retaining means (15) comprise for each end of the bar a contoured insert (70) integrally secured to the bar and carrying said tooth (30) hinged about said first axis; in said second stopper position of the tooth, the latter is at least partially accommodated in the insert (70) and however arranged within the transverse dimension of the insert in the seat; while in the latter stopper position, the tooth protruding from the insert (70) at least with one end (77) intended to cooperate with the engagement means (33) of the seat.

## Patentansprüche

1. Automatisches Auslösesystem (1), das ein aufrollbares Trenn- oder Abschirmelement (2) für das Fahrgastabteil eines Fahrzeugs aufweist; wobei das aufrollbare Element (2) folgendes aufweist: eine erste Seite (5), die betriebsmäßig mit einem im wesentlichen steifen Träger (7) verbunden ist, der an dem Fahrzeugaufbau befestigbar ist, wobei in diesem Träger (7) das Element von der Seite der ersten Seite (5) unter der Vorspannung einer elastischen Rückstelleinrichtung (6) aufgewickelt wird; und eine zweite Seite (10), die der ersten Seite gegenüberliegt und die mit einer im wesentlichen steifen Stange (11) verbunden ist, die parallel zu dem Träger angeordnet und relativ zu diesem in einer Richtung (M) senkrecht dazu gegen die Vorspannung der elastischen Rückstelleinrichtung (6) beweglich ist, wobei die Stange (11) in lösbarer Weise an dem Fahrzeugaufbau in einer distalen Position von dem Träger mittels einer Befestigungseinrichtung befestigbar ist, die eine von dem Fahrzeugaufbau getragene Verankerungseinrichtung (14) und eine Halteeinrichtung (15) aufweist, die integral von gegenüberliegenden Enden (16) der Stange getragen ist, welche von gegenüberliegenden Seiten (18) des aufrollbaren Elementes vorstehen und senkrecht zu seiner ersten Seite (5) und seiner zweiten Seite (10) angeordnet sind und im Gebrauch an der Verankerungseinrichtung blockierbar sind,
**dadurch gekennzeichnet,**
**daß** die Halteeinrichtung (15) folgendes aufweist:
mindestens einen Zahn (30), der an der kippbaren Stange (11) um eine erste Achse (A) parallel zu der ersten Seite und der zweiten Seite (5, 10) des aufrollbaren Elementes schwenkbar ist; und
eine bistabile Rückstelleinrichtung (32), die dazu ausgelegt ist, den kippbaren Zahn (30), infolge einer relativen Drehung der Stange (11) um eine zweite Achse (C) parallel zu der ersten Achse, selektiv in eine erste und
eine zweite Anschlagposition zu zwingen, in der der Zahn (30) dazu ausgelegt ist, jeweils mit einer Eingriffseinrichtung (33) der Verankerungseinrichtung (14) in Eingriff bzw. nicht in Eingriff zu kommen.

2. Automatisches Auslösesystem nach Anspruch 1,
**dadurch gekennzeichnet,**
**daß** die bistabile Rückstelleinrichtung (32) aus der Gruppe ausgewählt ist, die aus folgenden Einrichtungen besteht: einer magnetischen Einrichtung, einer elastischen Einrichtung sowie Kombinationen davon.

3. Automatische Auslöseeinrichtung nach Anspruch 1 oder 2,
**dadurch gekennzeichnet,**
**daß** die Verankerungseinrichtung (14), für jedes Ende der Stange, einen Sitz (20) für die Halteeinrichtung (15) aufweist, wobei in dem Sitz die Halteeinrichtung mit Abstand durch ein Mundstück (21) des Sitzes (20) unterbringbar ist, welches der gegenüberliegenden Seite des Trägers gegenüberliegt und, zu dem Träger (7) hin, mit einer Anschlageinrichtung (22) versehen ist, die dazu ausgelegt ist, eine Bewegung der Stange zu dem Träger hin unter der Vorspannung der elastischen Rückstelleinrichtung (6) zu verhindern; sowie, zu dem Mundstück (21) hin, mit einer Eingriffseinrichtung (33) für den Zahn (30) versehen ist, die dazu ausgelegt ist, ein Herausziehen der Halteeinrichtung (15) aus dem Sitz (20) zu verhindern, wenn sich der Zahn in der ersten Anschlagposition befindet; und daß der Sitz (20) derart geformt ist, daß er eine relative Drehung der Stange (11) bezüglich des Zahnes (30) um die zweite Achse (C) ermöglicht, um zumindest eine teilweise Freigabe des Zahnes (30) aus der Eingriffseinrichtung (33) in der ersten Anschlagposition des Zahnes zu bewirken.

4. Automatische Auslöseeinrichtung nach Anspruch 3,
**dadurch gekennzeichnet,**
**daß** die bistabile Einrichtung (32) aus einer ersten Magneteinrichtung (40), die integral von dem Zahn getragen ist, sowie einer zweiten Magneteinrichtung (42) und einer dritten Magneteinrichtung (41) besteht, die in dem Sitz (20) bzw. in der Stange (11) integral montiert sind und dazu ausgelegt sind, wenn sie sich in der Nähe der ersten Magneteinrichtung (40) befinden, eine umgekehrte entgegengesetzte erste Rückstellkraft (F1) und eine zweite Rückstellkraft (F2) zu erzeugen, wobei die zweite Magneteinrichtung (42) in dem Sitz (20) bei der Eingriffseinrichtung (33) für den Zahn montiert ist.

5. Automatische Auslöseeinrichtung nach Anspruch 3,
**dadurch gekennzeichnet,**
**daß** die bistabile Rückstelleinrichtung (32) aus einer ersten Magneteinrichtung (40), die integral von dem Zahn (30) getragen ist, und einer zweiten Magneteinrichtung (42) besteht, die integral in dem Sitz (20) montiert ist und dazu ausgelegt ist, wenn sie sich in der Nähe der ersten Magneteinrichtung befindet, eine erste Rückstellkraft (F1) für den Zahn (30) zu erzeugen; wobei die zweite Magneteinrichtung (42) in dem Sitz (20) bei der Eingriffseinrichtung (33) für den Zahn montiert ist; und wobei eine Feder (50) betriebsmäßig mit der Stange (11) und mit dem Zahn (30) verbunden ist, um eine zweite Rückstellkraft (F2) zu erzeugen, die der ersten Rückstellkraft auf den Zahn entgegengesetzt ist.

6. Automatisches Auslösesystem nach Anspruch 4 oder 5,
**dadurch gekennzeichnet,**
**daß** die erste Magneteinrichtung (40) aus einem Permanentmagneten besteht, während die zweite Magneteinrichtung (42) aus einer Platte aus feromagnetischem Material besteht.

7. Automatisches Auslösesystem nach Anspruch 3,
**dadurch gekennzeichnet,**
**daß** die bistabile Rückstelleinrichtung (32) von einem bistabilen elastischen Mechanismus (55), z. B. vom Kniepolstertyp gebildet ist, der betriebsmäßig mit einem ersten Ende (56) mit dem Zahn und mit einem, dem ersten Ende gegenüberliegenden zweiten Ende (58) mit der Stange verbunden ist.

8. Automatisches Auslösesystem nach einem der Ansprüche 3 bis 7,
**dadurch gekennzeichnet,**
**daß** der Zahn (30) auf der der Eingriffseinrichtung gegenüberliegenden Seite, mit einer Nase (60) versehen ist, die dazu ausgelegt ist, zumindest teilweise mit dem Sitz (20) zusammenzuwirken, vorzugsweise auf der Seite der Anschlageinrichtung (22) des Sitzes, um eine Relativdrehung des Zahnes bezüglich der Stange in dem Sitz (20) zwischen der ersten Anschlagposition und der zweiten Anschlagposition zu bewirken.

9. Automatisches Auslösesystem nach einem der Ansprüche 3 bis 8,
**dadurch gekennzeichnet,**
**daß** die Halteeinrichtung (15) für jedes Ende der Stange einen konturierten Einsatz (70) aufweist, der integral an der Stange befestigt ist und den Zahn (30) trägt, der um die erste Achse schwenkbar ist; wobei der Zahn in der zweiten Anschlagposition zumindest teilweise in dem Einsatz (70) untergebracht, jedoch innerhalb der Querabmessung des Einsatzes in dem Sitz angeordnet ist, während in der letzteren Anschlagposition der Zahn von dem Einsatz (70) zumindest mit einem Ende (77) vorsteht, was dazu dient, mit der Eingriffseinrichtung (33) des Sitzes zusammenzuwirken.

## Revendications

1. Système de libération automatique (1) comprenant un élément de séparation ou de criblage roulant (2) pour le compartiment passager d'un véhicule ; dans lequel l'élément roulant (2) présente : un premier côté (5) raccordé de manière opérationnelle à un support essentiellement rigide (7) pouvant être fixé sur la carrosserie du véhicule et dans lequel support (7), l'élément est enroulé à partir du côté du premier côté (5) sous la sollicitation de moyens de rappel élastiques (6) ; et un second côté (10) opposé au premier et raccordé à une barre essentiellement rigide (11) agencée parallèlement au support et mobile par rapport à ce dernier dans une direction (M) parallèle à celui-ci à l'encontre de la sollicitation des moyens de rappel élastiques (6), laquelle barre (11) peut être fixée d'une manière amovible à la carrosserie dans une position distale par rapport au support au moyen de moyens de fixation comprenant des moyens d'ancrage (14) supportés par la carrosserie du véhicule et des moyens de retenue (15) supportés de manière solidaire par les extrémités opposées (16) de la barre faisant saillie de côtés opposés (18) de l'élément roulant agencés perpendiculairement au premier (5) et au second (10) côtés de ce dernier et pouvant être retenus sur les moyens d'ancrage à l'usage ; **caractérisé en ce que** les moyens de retenue (15) comprennent : au moins une dent (30) articulée par rapport à la barre inclinée (11), autour d'un premier axe (A) parallèle aux premier et second côtés (5, 10) de l'élément roulant ; et des moyens de retour bistables (32) adaptés pour forcer sélectivement la dent inclinée (30), suite à une rotation relative de la barre (11) autour d'un second axe (C) parallèle au premier, vers une première et une seconde position de butée, dans laquelle la dent (30) est adaptée pour mettre en prise et ne pas mettre en prise respectivement des moyens de mise en prise (33) des moyens d'ancrage (14).

2. Système de libération automatique selon la revendication 1, **caractérisé en ce que** lesdits moyens de retour bistables (32) sont choisis dans le groupe comprenant : des moyens magnétiques, des moyens élastiques et leurs combinaisons.

3. Système de libération automatique selon la revendication 1 ou 2, **caractérisé en ce que** les moyens d'ancrage (14) comprennent, pour chaque extrémité de la barre, un siège (20) pour les moyens de retenue (15), dans lequel siège, les moyens de retenue peuvent être reçus avec du jeu à travers une embouchure (21) du siège (20) faisant face au côté opposé du support et qui est prévue, vers le support (7) avec des moyens de butée (22) adaptés pour empêcher la barre de se déplacer vers le support sous la sollicitation des moyens de rappel élastiques (6) ; et, vers l'embouchure (21), avec les moyens de mise en prise (33) pour la dent (30) qui sont adaptés pour empêcher l'extraction des moyens de retenue (15) du siège (20) lorsque la dent est dans ladite première position de butée ; ledit siège (20) étant formé afin de permettre la rotation relative de la barre (11) par rapport à la dent (30) autour du second axe (C) afin de provoquer au moins une libération partielle de la dent (30) des moyens de mise en prise (33) dans la première position de butée de la dent.

4. Système de libération automatique selon la revendication 3, **caractérisé en ce que** lesdits moyens de retour bistables (32) se composent de premiers moyens magnétiques (40) supportés de manière solidaire par la dent ; et de deuxième (42) et troisième (41) moyens magnétiques montés de manière solidaire, respectivement, dans le siège (20) et dans la barre (11) et adaptés pour générer, lorsqu'ils sont à proximité des premiers moyens magnétiques (40), une première (F1) et une seconde (F2) force de rappel réciproquement opposées ; les seconds moyens magnétiques (42) étant montés dans le siège (20) au niveau des moyens de mise en prise (33) pour la dent.

5. Système de libération automatique selon la revendication 3, **caractérisé en ce que** lesdits moyens de retour bistables (32) se composent de premiers moyens magnétiques (40) supportés de manière solidaire par la dent (30) ; de seconds moyens magnétiques (42) montés de manière solidaire dans le siège (20) et adaptés pour générer, lorsqu'ils sont à proximité des premiers moyens magnétiques, une première force de rappel (F1) pour la dent (30) ; les seconds moyens magnétiques (42) étant montés dans le siège (20) au niveau des moyens de mise en prise (33) pour la dent ; et un ressort (50) raccordé de manière opérationnelle à la barre (11) et à la dent (30) pour générer une seconde force de rappel (F2) opposée à la première, sur la dent.

6. Système de libération automatique selon la revendication 4 ou 5, **caractérisé en ce que** lesdits premiers moyens magnétiques (40) se composent d'un aimant permanent, alors que les seconds moyens magnétiques (42) se composent d'une plaque réalisée avec un matériau ferromagnétique.

7. Système de libération automatique selon la revendication 3, **caractérisé en ce que** lesdits moyens de retour bistables (32) sont définis par un mécanisme élastique bistable (55), par exemple du type genouillère, raccordé de manière opérationnelle par une première extrémité (56) à la dent et par une seconde extrémité (58) opposée à la première, à la barre.

8. Système de libération automatique selon l'une quelconque des revendications 3 à 7, **caractérisé en ce que** ladite dent (30) est prévue, sur le côté opposé aux moyens de mise en prise, avec une patte (60) adaptée pour coopérer au moins partiellement avec le siège (20), de préférence sur le côté desdits moyens de butée (22) du siège, pour provoquer une rotation relative de la dent par rapport à la barre dans le siège (20) entre la première et la seconde position de butée.

9. Système de libération automatique selon l'une quelconque des revendications 3 à 8, **caractérisé en ce que** lesdits moyens de retenue (15) comprennent pour chaque extrémité de la barre, un insert profilé (70) fixé de manière solidaire à la barre et supportant ladite dent (30) articulée autour dudit premier axe ; dans ladite seconde position de butée de la dent, cette dernière est au moins partiellement logée dans l'insert (70) et cependant agencée dans la dimension transversale de l'insert dans le siège ; alors que dans la dernière position de butée, la dent fait saillie de l'insert (70) au moins avec une extrémité (77) prévue pour coopérer avec les moyens de mise en prise (33) du siège.
